# EUROPEAN PATENT SPECIFICATION

(11) **EP 1 610 331 B1**
(45) Date of publication and mention of the grant of the patent: **25.03.2009**
(21) Application number: 05020985.7
(22) Date of filing: 10.12.2002
(51) Int. Cl.: G11B 33/04

(54) **Packaging for multiple media discs**
Verpackung für mehrere Medienplatten
Emballage pour de nombreux disques

(30) Priority: 11.12.2001 US 339510 P; 27.09.2002 US 259341
(43) Date of publication of application: 28.12.2005
(62) Divisional of application: 02804795.9
(73) Proprietor: MeadWestvaco Corporation, Glen Allen, VA 23060 (US)
(72) Inventor: Gelardi, John A., Kennebunkport, ME 04046 (US); Thibault, Richard C., Bromall PA 19008 (US); Kaman, Sin, Brooklyn NY 11206 (US)
(74) Representative: Oliver, Peter Anthony

(56) References cited:
- CH-A- 678 370
- US-H- H1 954

## Description

The present invention relates generally to improvements to product packaging, and more particularly to advantageous aspects of packaging for holding multiple media discs and methods for making same.

Numerous packages have been developed for holding media discs. The basic media disc package is the so-called "jewel case", which typically includes a tray for holding a media disc, and a hinged cover that snaps into place over the tray. Jewel cases have been developed to hold two media discs. One such jewel case includes a two sided central tray that receives a media disc on each side. Another jewel case provides for two media discs to be stacked, one on top of each other, in the same tray. However, neither of these designs is entirely satisfactory for a number of reasons, including ease of use and aesthetic appearance. Further, it is becoming increasingly common for media discs to be packaged in sets having more than two discs.

In US H1954H, a package provided that incorporates a stack of media disc holding trays secured to one another using elasticated cords threaded through apertures in each tray, proximate the hinge edge, the stack then is secured to a jacket.

In CH 677 837 , a stack of media-disc holding sleeves, each requiring an integral hinge between a storage panel and a spine panel, are mounted by securing each respective spine panel one to the next. The stack is bound by an outer covering and inserted into a further casing for protection.

However, in both of the instances above, there is not provision for a package of multiple media-disc holding trays, that can be mounted in a stack using an inexpensive, reliable and durable hinge means, that is then mounted on a panel of a jacket for protection of the package and in so doing allowing opening of said jacket without imposing a force upon the media-disc tray stack.

There is therefore a need for easy-to-use, aesthetically appealing packaging for holding multiple media discs that can be manufactured at an acceptably low cost.

A first aspect of the invention provides a package for holding media discs, which package comprises a stack of disc-holder trays, each tray in the stack having a hinged edge face, a primary surface defining portion of the tray, for releasably retaining a disc upon that primary surface defining portion, the hinged edge faces of the trays in the stack being aligned with each other so that all the hinged edge faces of the stack are substantially flush, and so that the primary surface defining portion of each tray in the stack is immediately adjacent the primary surface defining portion of the tray immediately adjacent thereto so that, when the trays are assembled one above the other, that primary surface defining portion thereby acts as a cover for any disc that is releasably retained by the immediately adjacent tray, a flexible hinge and connecting member permanently affixed to all the flush hinged edge faces, such that all the hinge edge faces are connected to a common flexible hinge and connecting member, the flexible hinge and connecting member being disposed in a plane substantially containing and connecting the flush edge faces, and hinging the trays together one to the next so that they can be fanned out by flexing the flexible hinge and connecting member along planes which pass between each adjacent pair of hinged edge faces.

Preferably, the package further includes a jacket and is closed by folding the jacket around the stack of trays.

Preferably, the stack of trays is attached to the jacket only at a single tray mounted onto an interior panel of the jacket.

Preferably, there further includes a slip case that closely fits around the stack of trays and jacket when they are folded into a closed configuration.

Preferably, there further includes fastening means for holding the package closed.

Preferably, the jacket includes a plurality of panels that wrap around the stack of trays, the jacket further including a flap extending from a first panel that attaches to a second panel to hold the-package closed.

Preferably, the hinged edge faces of an adjacent pair of trays can be hinged from a closed position in which the hinged edge faces are substantially flush to an open position in which adjacent hinged edge faces are juxtaposed.

Alternatively, there further includes a carrier into which the stack of trays is inserted.

A second aspect of the invention provides a method for manufacturing a package, which method comprises: aligning a plurality of disc-holder trays adjacent one another to form a stack of trays such that a hinge edge face of each tray is flush with a hinged edge face of each other tray, and such that a primary surface defining portion of each tray, for releasably receiving a disc, is immediately adjacent the primary surface defining portion of the tray immediately adjacent thereto so that the primary surface defining portion acts as a cover for any disc that is releasably retained upon the primary surface defining portion of the immediately adjacent tray; affixing a flexible hinge and connecting member to those hinged edge faces such that all the hinge edge faces are connected to a common flexible hinge and connecting member in a common plane such that the trays are hinged one to the next and so that they can be fanned out by flexing the flexible hinge and connecting member along planes which pass between each adjacent pair of hinged edge faces.

Preferably, there further comprises the method of mounting the stack of trays onto an interior panel of a jacket, the jacket folding around the stack of trays to close the package.

Preferably, a bottom tray of the stack of trays is mounted onto the interior panel of the jacket.

Preferably, the method further comprises wrapping a plurality of panels, of which the jacket is comprised, around the stack of trays, the jacket further comprising a flap extending from a first panel, which flap is attached to a second panel to hold the package closed.

Alternatively, the method further comprises advancing the stack of trays so as to affix the flexible hinge and connecting member to the stack of trays.

Preferably, the method comprises cutting the hinge material between the trays at regular intervals to produce hinge assemblies having a desired number of trays.

A third aspect of the present invention provides an assembly for creating a package for holding a plurality of media discs in said package, the assembly comprising a plurality of trays each of which is adapted to receive a media disc and to releasably retain a disc in situ, and means arranged to be applied to a hinge edge face of a stack formed by said plurality of trays having their hinge edge faces in a common plane whereby to secure the trays together to form said package, the means comprising a flexible hinge and connecting member which can be applied to the plurality of hinge edge faces in the form of a strip of predetermined length or from a continuous supply thereof so that, when the trays are so assembled they can be fanned out by flexing the flexible hinge and connecting member along planes which pass between each adjacent pair of hinged edge faces.

An embodiment of the invention will now be described, by way of example, with reference to the accompanying drawings, in which:-
Fig. 1 shows a perspective view of a package for holding media discs according to a first aspect of the invention.
Fig. 2 shows an exploded perspective view of the package shown in Fig. 1.
Fig. 3 shows a perspective view of the package shown in Fig. 1 illustrating the placement of a media disc into the package.
Fig. 4 shows a perspective view of the package shown in Fig. 1, with a media disc seated in a disc-holding tray in the package.
Fig. 5 shows a perspective view of the package shown in Fig. 1 in a closed configuration.
Fig. 6 shows an end view of the package shown in Fig. 1, with the disc-holding trays fanned into an open position.
Fig. 7 shows a perspective view of the package shown in Fig. 1, with the disc-holding trays fanned into an open position.
Fig. 8 shows a perspective view of the package shown in Fig. 1, with the disc-holding trays fanned into an open position, and with the package stood on one end.
Fig. 9 shows a perspective view of a single disc-holding tray suitable for use in accordance with an aspect of the invention.
Fig. 10 shows a plan view of the interior surface of a jacket suitable for use in accordance with an aspect of the invention.
Fig. 11 shows a perspective view of a package for holding media discs in accordance with a further aspect of the invention.
Fig. 12 shows a perspective view of the package shown in Fig. 11 and a slip case.
Fig. 13 shows a perspective view of the package shown in Fig. 11 partially slid into the slip case.
Figs. 14 and 15 show alternative perspective views of a hinged tray assembly in accordance with an aspect of the invention.
Fig. 16 shows a perspective view of a hinged tray assembly and a hinge member in accordance with an aspect of the invention.
Fig. 17 shows a perspective view of a stack of trays and a swath of hinge material in accordance with a further aspect of the invention.
Fig. 18 shows a perspective view of the stack and swath shown in Fig. 17, with the swath affixed to the stack of trays.
Fig.19 shows a perspective view of the stack and swath shown in Fig. 18, with lines marked for cutting the swath.
Fig. 20 shows the stack and swath shown in Fig. 19, separated into individual hinge assemblies.
Fig. 21 shows a diagram of a binding machine according to a further aspect of the invention.
Fig. 22 shows a flowchart illustrating a method for making a media package according to an aspect of the invention.
Figs. 23-26 show perspective views of packages according to aspects of the present invention in which matter has been printed onto the jackets.
Fig. 27 shows a perspective view of a package according to a further aspect of the invention, wherein the package includes fastening means for holding the package closed.
Figs. 27A and 278 show side views of a fastening arrangement suitable for use in a package such as the one shown in Fig. 27.
Figs. 28-30 show perspective views of packages according to further aspects of the invention, wherein there are provided alternative fastening means for holding the packages closed.

As used herein, the term "media disc" refers to a compact disc (CD), digital video disc (DVD), or other disc or disc-shaped media item that is used to store analog or digital information.

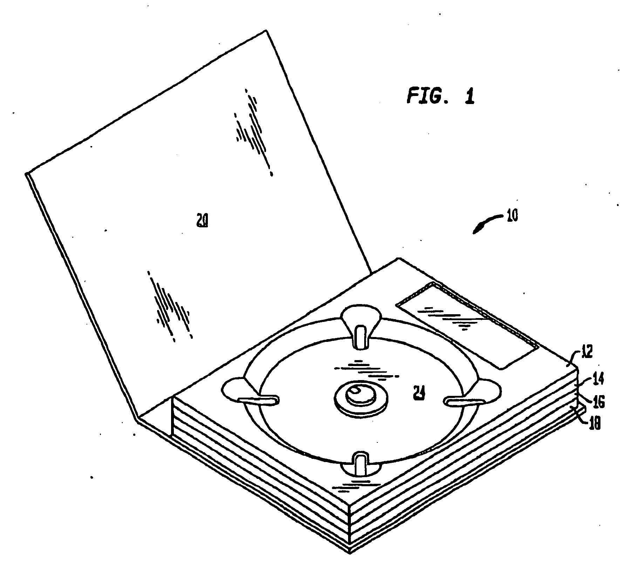

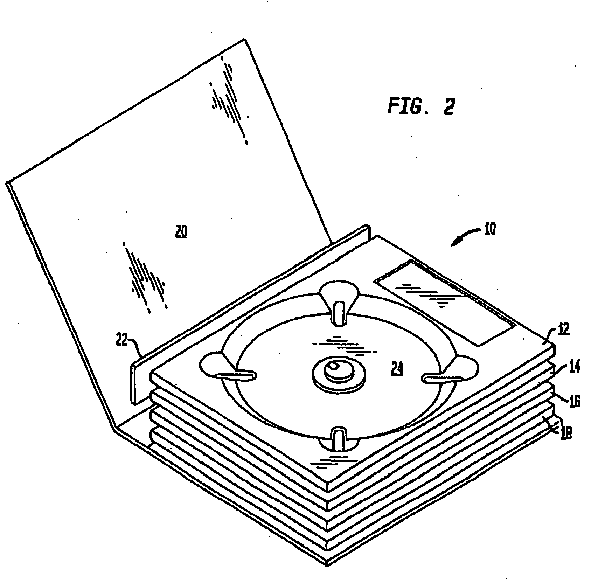

Referring to the drawings, Fig. 1 shows a perspective view, and Fig. 2 shows an exploded perspective view, of a media package 10 according to a first aspect of the invention. The media package 10 includes a plurality of disc-holding trays 12 14, 16 and 18 that are arranged in a stack. As shown in Fig. 2, the trays are hinged to each other by a flexible hinge member 22 that is affixed to one side of the stack of trays. In one embodiment the stack of trays is mounted onto an interior panel of an outer jacket 20. Alternatively, the stack of trays may be inserted into an open-ended sleeve or other carrier.

The hinge member 22 is fabricated from a suitable material, such as a styrene-based film or tape, polyethylene, polypropylene, or the like. The hinge member 22 may be fabricated, for example, from a strip of commercially available poly tape. The hinge member 22 must be flexible enough to allow the package 10 to be opened and closed freely, but must be strong enough to prevent premature failure of the hinge member or separation of the tray stack from the jacket 20. The hinge member may be affixed to the trays using an adhesive, or using a mechanical technique, including techniques using ultrasound or heat. In addition, the stack of trays 12, 14, 16 and 18 may be hinged to a number of different configurations without departing from the scope of the claims. In the package 10 shown in Fig. 1, the hinge member 22 is positioned proximate to the spine of the jacket 20, in a parallel relationship with the folds in the jacket 20. However, it would also be possible to position the hinge member 22 distal from the spine of the jacket 20, or in a transverse relationship with the folds in the jacket 20.

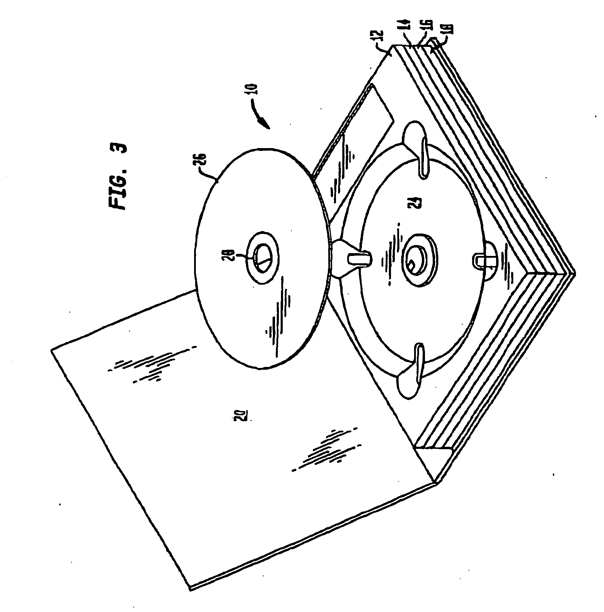

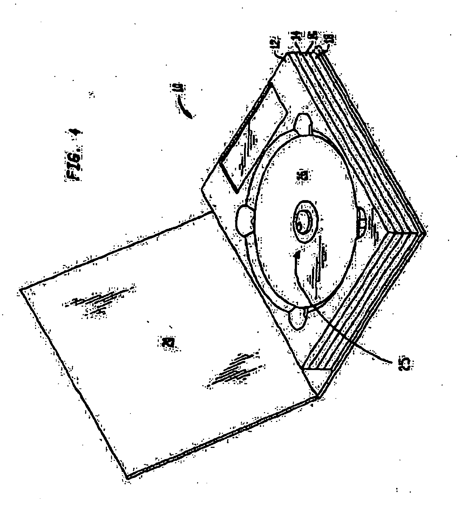

Each tray in the package 10 includes a primary surface defining portion 25 for receiving a media disc, which primary surface is, in a preferred embodiment, a cavity 24. Figs. 3 and 4 are perspective views of the package 10 shown in Figs. 1 and 2, illustrating the placement of a media disc 26 into the cavity 24 in the top tray 12. As shown in Fig. 3, media discs commonly include a central spindle hole 28. As described below, the spindle hole 28 can be used to help hold the disc in position in a tray. In Fig. 4, the media disc 26 has been seated in the cavity 24.

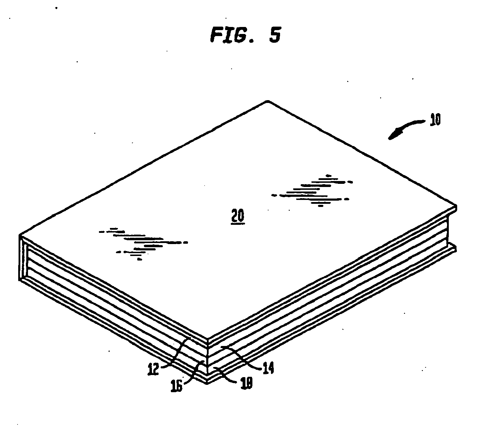

Fig. 5 shows a perspective view of the package 10 shown in Fig. 1 in a closed configuration, with the jacket 20 folded around the stack of trays 12, 14, 16 and 18. As shown in Fig. 5, the result is a compact boxlike structure.

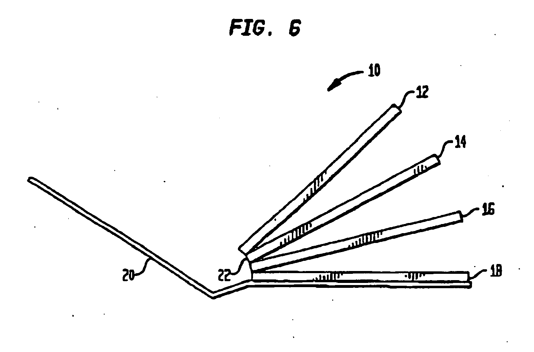

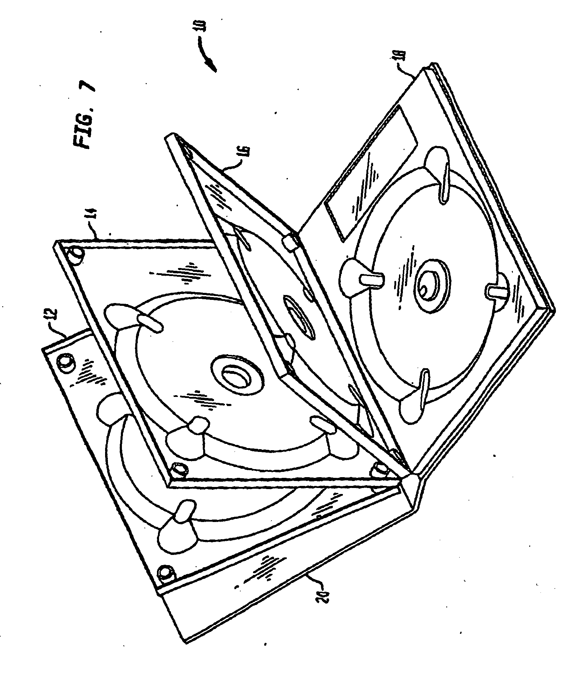

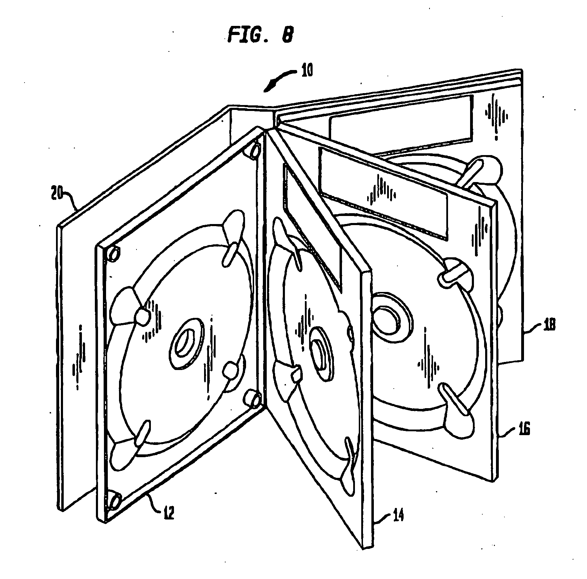

Fig. 6 shows an end view of the package 10 in an open configuration. The jacket 20 has been opened, and the trays 12, 14, 16 and 18 have been fanned apart from each other, anchored by the hinge member 22. Fig. 7 shows a perspective view of the open package 10. Fig. 8 shows that, when the trays have been fanned into an open position, the package 10 can be stood upright. The package may be stood on end, for example, to display the package 10 and its contents in a retail environment.

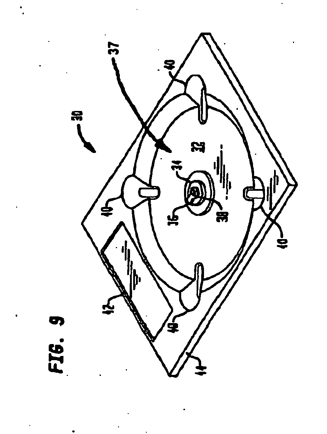

Fig. 9 shows a perspective view of a tray 30 that is suitable for use in a media package according to the present invention. The tray 30 includes a primary surface defining portion 37 closely receiving a media disc, which primary surface is, in a preferred embodiment, a central cavity 32 that is shaped so as to closely receive the media disc. At the centre of the cavity 32, a hub 34 is shaped and positioned to closely fit within a media disc's central spindle hole 28 when the disc is seated in the cavity 32. The hub 34 includes a small locking tab 36 which engages the rim of the media disc's spindle hole to prevent the disc from accidentally becoming disengaged from the cavity 32. The hub 34 further includes a release button 38, which, when depressed, causes the locking tab 36 to retract, thereby allowing the media disc to be removed from the cavity 32. The tray 30 further includes four indentations 40 which are provided to provide access to a user's fingers to facilitate the removal of a disk from the cavity 32. In addition, the tray includes a region 42 for receiving labelling information. Information may be molded directly within this region 42, or may be printed onto a separate sheet of paper or plastic and then affixed in the region 42.

The tray 30 includes an edge 44, referred to herein as a "hinge edge", that is used to hinge the tray 30 to other trays. The hinge edge 44 is positioned such that when a plurality of trays are stacked on top of each other, the hinge edges 44 are lined up with each other to receive a hinge member, such as the hinge member 22 shown in Fig. 2.

The style, shape, and dimension of the tray 30, including the number of indentations therein and the design and shape of the hub 34, may be varied and are not limited in any way by this disclosure. The tray 30 may suitably be fabricated from a plastic material that has been injection molded. Suitable materials for the tray include polystyrene and polypropylene. If desired, the tray 30 can be fabricated from a clear material, such as crystal styrene. The use of a clear material may be desirable from an aesthetic point of view. Further, the use of a transparent material for the trays allows a user of the package to quickly determine whether any of the trays are empty.

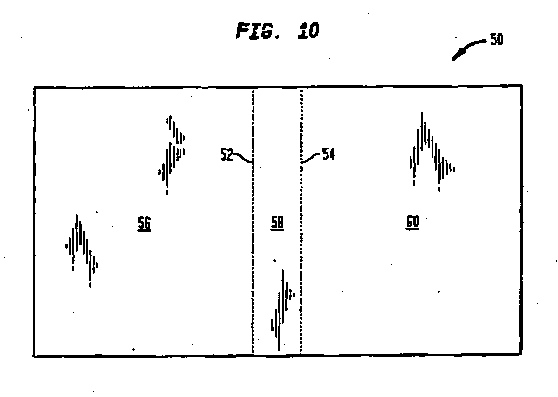

Fig. 10 shows a plan view of a jacket 50 suitable for use in some embodiments of the media package 10. Fig. 10 shows the interior side of the jacket 50. Prior to the addition of any text, graphics, and the like to the jacket 50, the exterior side of the jacket 50 is substantially identical in appearance to the interior side. According to one aspect of the invention, the jacket 50 is shaped such that it can be folded around a stack of trays mounted into the jacket 50 to form a boxlike package. The jacket may be fabricated from the paper, paperboard, cardboard, plastic, or other suitable material. According to a further aspect of the invention, the jacket is fabricated from a material that is suitable for a high-speed printing process. As shown in Fig. 10, the jacket includes a pair of crease lines 52 and 54, which are used to fold the jacket 50 cleanly around a stack of trays mounted into the jacket. The crease lines 52 and 54 divide the jacket 50 into three sections: a front interior panel 56, a spine 58, and a rear interior panel 60. On the exterior side of the jacket 50 (not shown), the crease lines 52 and 54 further define a front exterior panel on the other side of the front interior panel 58, and a rear exterior panel on the other side of the rear interior panel 60. Thus, the jacket 50 shown in Fig. 10 is referred to as a "four-panel" design. It would be possible to include additional panels by increasing the length of the jacket 10 and provided additional creases, as needed. For example, the jacket 50 shown in Fig. 10 may be modified to incorporate a "six-panel" design.

The creases 52 and 54 may be introduced into the jacket using a number of different techniques. For example, if the jacket is fabricated from paperboard or cardboard, the creases can be introduced by pressing a scoring blade into the jacket. If the jacket is fabricated from plastic, the creases may be formed using an electron beam or other suitable technique.

It should be noted that the shape of the jacket may be modified, as desired, within the scope of the claims. For example, it may be desirable to include cutout regions in the jacket. Further, it may be desirable for portions of the jacket to extend beyond the perimeter of the stack of trays.

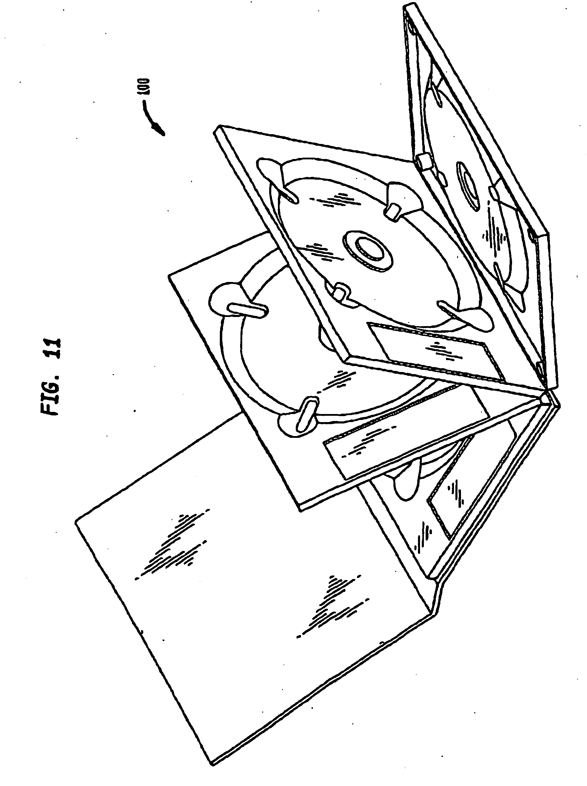

Fig. 11 shows a perspective view of a media package 100 according to a further aspect of the invention, in which the stack of trays is hinged away from the spine of the jacket. There are certain differences between the location of the hinge shown in Fig. First, depending on how the package is used, the location of the hinge away from the spine of the jacket may result in less strain on the package as it is unfolded. Second, hinging the trays to the outside of the jacket allows the inside front panel of the jacket to remain visible as the trays are fanned open. Thus, if informational content is printed on the inside front panel, this informational content will continue to be visible as each tray is fanned out. Further, if the package is opened for display, the location of the hinge along an outside edge of the jacket allows more of the package interior to be displayed. In other embodiments (not shown), the hinge edge may be located along the top edge of the jacket, such that the stack of trays may be opened by folding upward and outward.

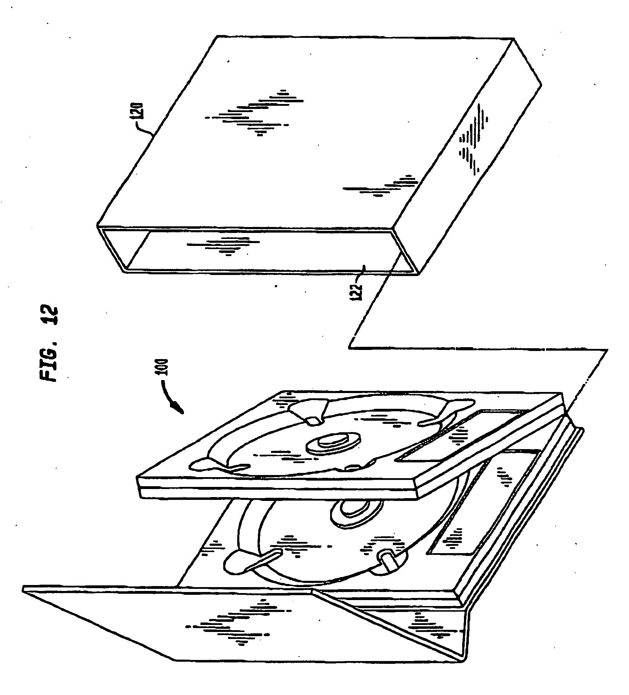

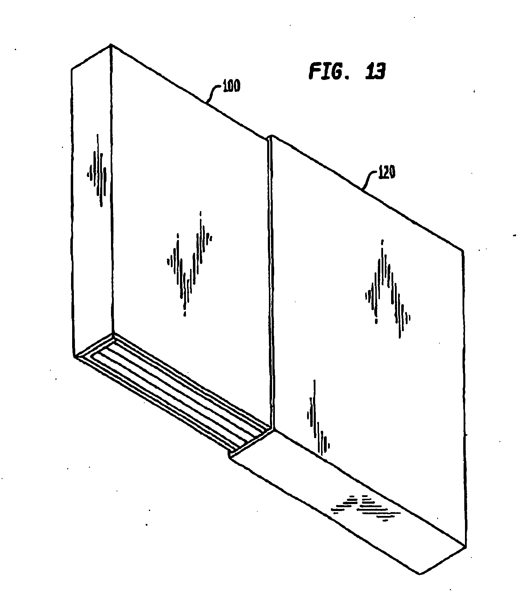

As shown in Figs. 12 and 13, the media package 100 shown in Fig. 11 may be advantageously combined with a slip case 120 that is shaped to closely receive the closed package 100. As shown in Figs. 12 and 13, the slip case 120 includes an open side 122 that allows the closed package 100 to be slid into the slip case 120,

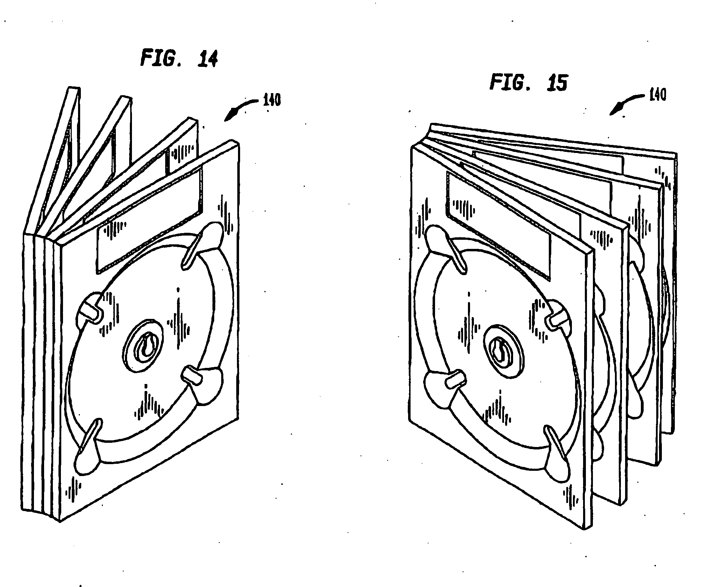

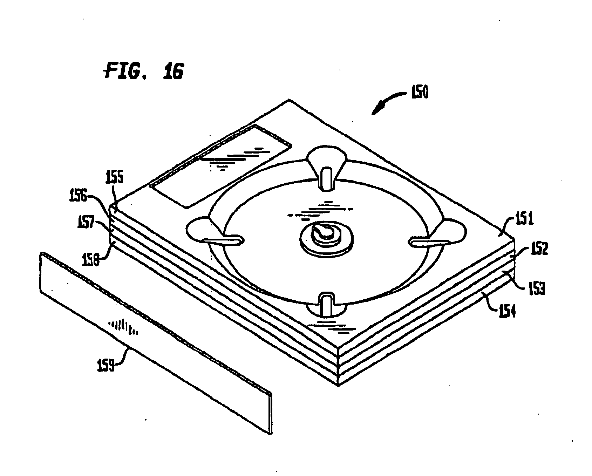

Figs. 14 and 15 show alternative perspective views of a tray assembly 140 that may be used in a media package according to aspects of the invention. According to a further aspect of the invention, hinged tray assemblies 140 are constructed separately from the jackets. Fig. 16 illustrates a technique for manufacturing a single hinged tray assembly 150. According to this technique, a selected number of trays 151, 152, 153 and 154 is stacked into a desired configuration. The trays include hinge edges 155, 156,157 and 158 that are lined up in the stack for receiving a hinging member 159. As mentioned above, the hinging member 159 may suitably be implemented using tape, a film, or other material that, on the one hand, is flexible enough to allow the trays to hinge freely with respect to each other while, on the other hand, is sufficiently strong to prevent the hinging member from splitting apart along the hinge lines. The hinging member may be affixed to the hinging surface in any of a number of ways, including using an adhesive, a heat-based technique, or other bonding techniques. The hinging member may be suitably provided on a roll that is unwound and cut, as desired.

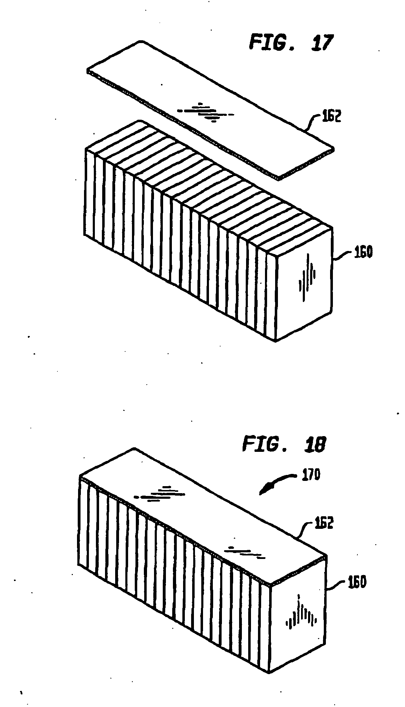

Figs. 17 through 20 illustrate a technique for fabricating a plurality of hinged assemblies simultaneously. As shown in Fig. 17, according to this technique, a plurality of trays 160 is arranged side by side so that their hinge edges are in alignment. The number of trays is a multiple of the number of trays in each hinged assembly in the finished package.

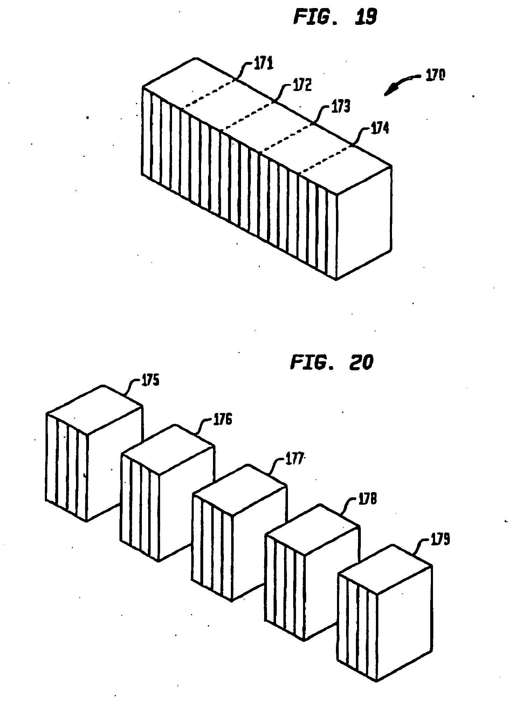

A swath of hinge material 162 is then prepared, having dimensions corresponding to the size of the combined hinge edges. As shown in Fig. 18, the swath of hinge material 162 is then affixed onto the hinge edges of the trays 160 to form an integral unit 170. As shown in Fig. 19, the swath of hinge material is then cut between trays at regular intervals 171, 172, 173 and 174, each interval including the desired number of trays. As shown in Fig. 20, individual hinged assemblies 175, 176, 177, 178 and 179 are then separated. The hinged assemblies are then mounted into jackets, as described above. The swath of hinge material may be cut, for example, in a singe stroke using a bar having cutting blades mounted thereon. Of course, the cuts may also be made one at a time,

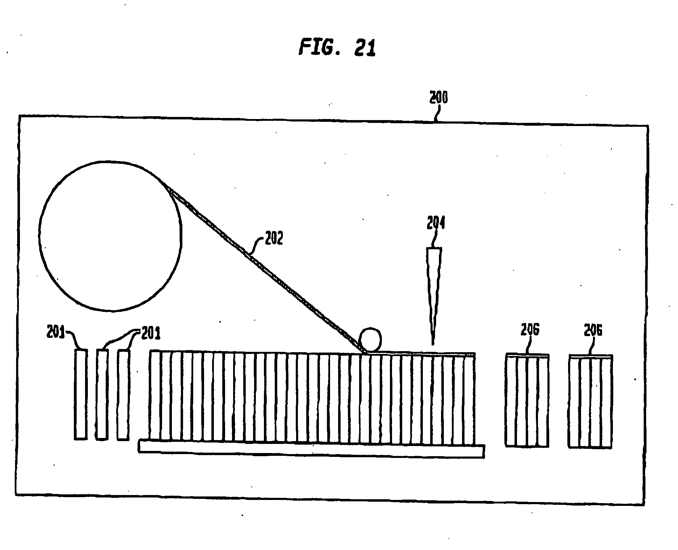

Fig. 21 shows another technique for fabricating hinged assemblies in accordance with a further aspect of the invention. According to this aspect of the invention, trays 201 are fed into a binding machine 200. The trays are fed into the machine such that their hinge edges are lined up with each other to receive a hinging material 202. This can be done, for example, by providing a fixture for holding the trays. As the trays are advanced through the machine, the machine automatically applies hinge material 202 to the hinge edges of the trays. A blade 204, or other cutting device automatically cuts the hinge material 22 between trays to produce hinged assemblies 206 having the desired number of trays.

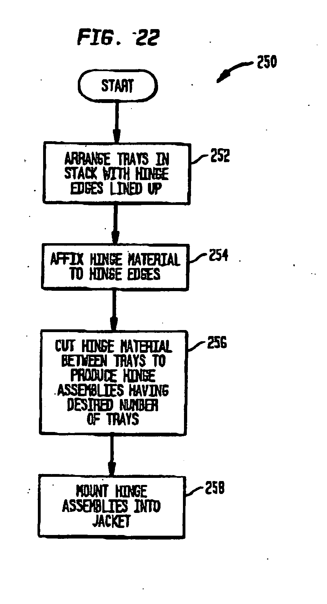

Fig. 22 shows a flowchart illustrating a method 250 for making a media package according to an aspect of the invention. In step 252, a set of disc-holding trays is arranged into a stack. The trays each have hinge edge, and these hinge edges are lined up in the stack. In step 254, a hinging material is affixed to the hinge edges to hinge the trays together. In step 256, the hinging material is cut between trays to produce individual hinge assemblies having a desired number of trays. In step 258, the hinge assemblies are mounted into a jacket to form the finished package. The jacket may be fabricated to include text, graphics or other esthetic or informational components. It is contemplated that a high-speed printing technique may be used in the fabrication of the jackets.

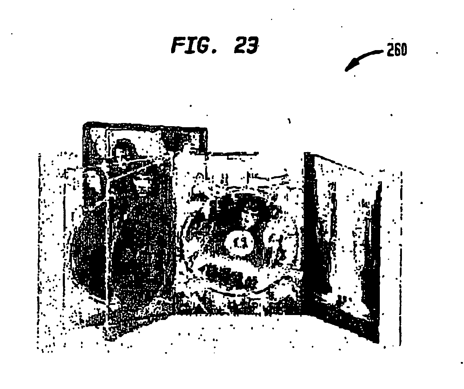

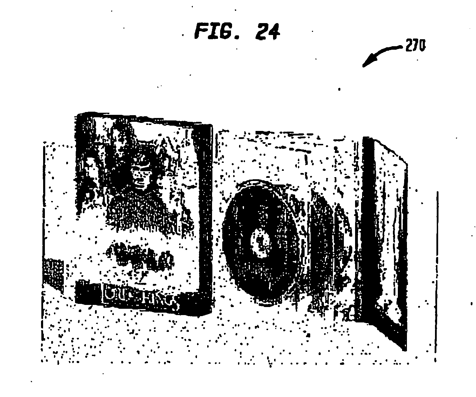

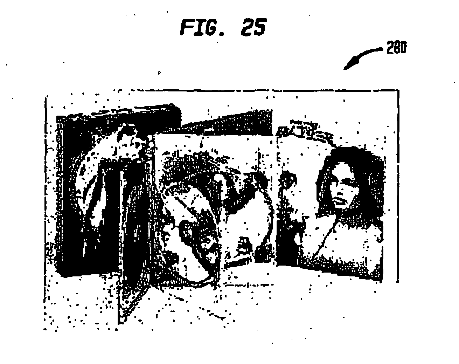

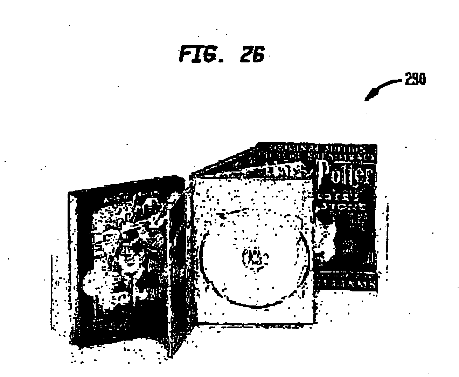

Figs. 23 through 26 show perspective views of packages 260, 270, 280 and 290 according to aspects of the present invention, in which matter has been printed onto the jackets.

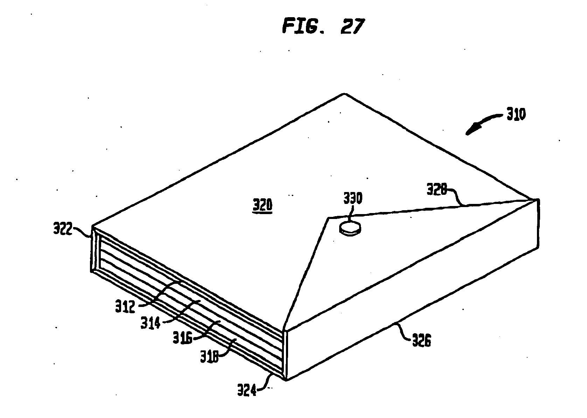

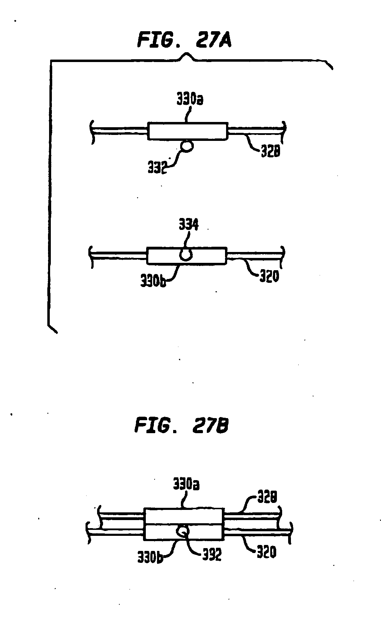

Further aspect of the invention are directed to packages including structures for holding the packages closed. Fig. 27 shows a perspective view of a package 310, in which a stack of four trays 312, 314, 316 and 318 is hingeably mounted inside a jacket comprising a front panel 320, a spine panel 322, and a back panel 324. It will be seen that the package 310 further includes a wraparound panel 326 extending from the back panel 324, and a wraparound flap 328 extending from the wraparound panel 326.

The wraparound panel 326 and wraparound flap 328 are positioned and shaped to fold closely around the stack of trays 312-318 and the jacket front panel 320. The flap 328 is provided with a fastener 330 for removably attaching the flap 328 to the front panel 320. The fastener 330 may be implemented using a snap with a first mating, element mounted to the inner surface of the flap 328 and a second mating element mounted to the front panel 320. Alternatively, the fastener 330 may be implemented using a pair of hook-and-loop fasteners, magnet, or the like, between the inner surface if the flap 328 and the front panel 320.

The wraparound panel 326 and the wraparound flap 328 may suitably be fabricated from the same sheet of material as the other jacket panels 320, 322 and 324. As described above, suitable materials include paperboard, cardboard, plastic, and the like. The wraparound panel 326 and wraparound flap 328 may be scored to facilitate their folding around the stack of trays 312-318.

In the Fig. 27 package 310, the stack of trays 312-318 are hinged at the spine panel 322. The wraparound panel 326 is located opposite the spine panel 322, and thus prevents the stack of trays 312-318 being fanned open when the flap 328 is attached to the front panel 320. If desired, one or more additional wraparound panels and flaps may be provided, which wrap around either the top edge or the bottom edge of the stack of trays 312-318, or around both the top and bottom edges of the stack of trays 312-318.

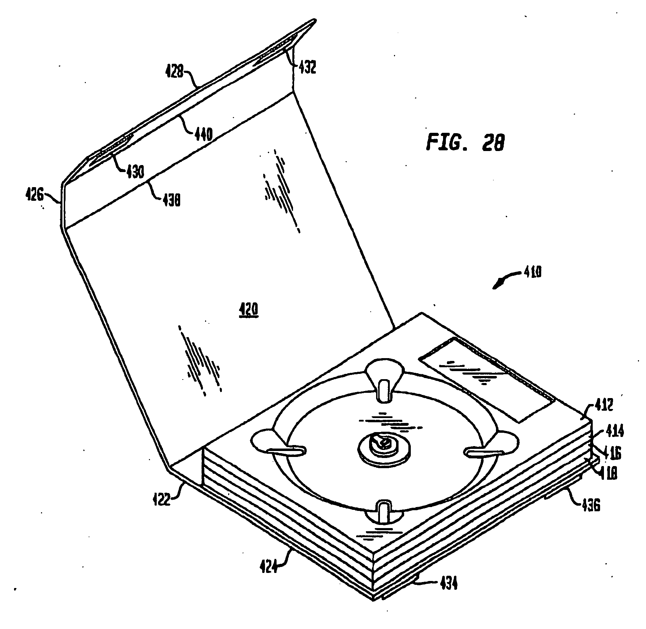

Figs. 27A and 28B show side views of a fastening arrangement suitable for use with a package such as the one shown in Fig. 27. As shown in Fig. 27A, the fastening arrangement includes an upper fastening element 330a mounted into the wraparound flap 328. A ball-shaped nub 332 projects downward from the upper fastening element 330a. The fastening arrangement further includes a lower fastening element 330b mounted into the front panel 320. The lower fastening element 330b includes a cavity 334 that is shaped to closely receive the nub 332 projecting downward from the upper fastening element 330a. The upper and lower fastening elements 330a and 330b are positioned with respect to each other on the wraparound flap 328 and the front panel 320 such that when the package 310 is closed up, the fastening elements 330a and 330b line up with each other.

As shown in Fig. 27A, the mouth of the cavity 334 has a diameter that is slightly smaller that the diameter of the nub 332. The lower fastening element 334 is fabricated from a slightly deformable material that allows the nub 332 to be forced through the mouth of the cavity 334. The nub 332 and cavity are dimensioned to allow the two fastening elements 330a and 330b to be snapped securely together, while also allowing them to be readily unsnapped. The fastening elements 330a and 330b may be suitably fabricated, for example, from a hard plastic or similar material.

Fig. 28 shows a perspective view of a package 410 including an alternative closing arrangement. The package 410 includes a stack of trays 412, 414, 416 and 418 that are hingeably mounted to each other at one edge. The stack of trays 412-418 is mounted into a jacket including a front panel 320, a spine panel 422, and a rear panel 424. Specifically, the bottom surface of the bottom tray 418 in the stack is mounted to the inner surface of the rear panel 424.

The jacket further includes a wraparound panel 426 and a wraparound flap 428 that are positioned and shaped to fold closely around the stack of trays. The wraparound flap 428 includes a pair of fasteners 430 and 432 that attach to mating fasteners 434 and 436 mounted to the outer service of the rear panel 424. The fasteners 430-436 may be implemented using snaps, hook-and-loop fasteners, magnets, or the like.

If magnets are used for the fasteners 430-436, it may be desirable to conceal the magnets for esthetic reasons. This concealment may be accomplished in a number of ways. For example, if the jacket panels are fabricated from paperboard, the magnets may be concealed by gluing them between layers of paperboard. Also, it would be possible to conceal the magnets by using thin sheets of material that are glued over the magnets.

The wraparound panel 426 and wraparound flap 428 may suitably be fabricated from the same sheet of material as the other jacket panels. As shown in Fig. 28, a first score line 438 separates the wraparound panel 426 from the front panel 420, and a second score line 440 separates the wraparound flap 428 from the wraparound panel 426. The two score lines 438 and 440 facilitate the folding of the wraparound panel 426 and 428 around the stack of trays 412-418.

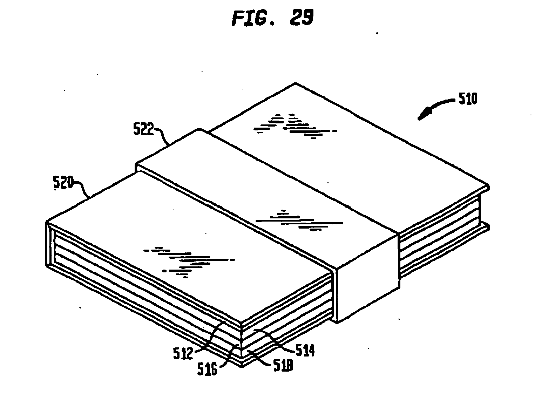

Fig. 29 shows a perspective view of a package 510 including another closing arrangement. The package 510 includes a stack of trays 512, 514, 516 and 518 that are hingeably mounted to each other inside a jacket 520. The package 510 is held closed by a "belly band" 522 that fits closely around the "waist" of the package 510. The belly band 522 may be suitably fabricated from a strip of plastic, paper, paperboard, cardboard, or the like. The strip is scored and folded, and then the two ends of the strip are attached to each other to form a band. The band is shaped such that it may be slipped over one end of the package 510 and then slid into position to hold the package 510 closed. The package 510 would then be opened by sliding the band 522 off the package 510. If the band 522 is fabricated from paper, the band 522 may be simply be tom off the package 510. If desired, the band 522 may be provided with printed matter, such as text or graphics.

It would also be possible to form a band 522 from a strip having ends that are removably attached to each other using, for example, a snap, hook-and-loop fasteners, magnets, or the like. In that case, the package 510 would be closed by wrapping the two ends of the strap around the package 510 and then attaching the two ends together. The package 510 would then be opened by detaching the two ends from each other.

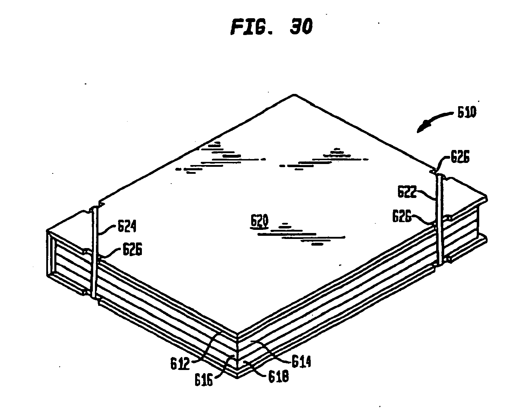

Fig. 30 shows a perspective view of a package 610 including another arrangement. The package 610 includes a stack of trays 612,614,616 and 618 that are hingeably mounted to each other inside a jacket 620. The package 610 is held closed by an elastic band having first and second ends 622 and 624 that loop around opposite corners of the package 610. In order to help the elastic band ends 622 and 624 maintain their position on the package 610, suitably positioned notches 626 may be cut into the jacket 620. As shown in Fig. 30 the notches 626 may extend across the trays 612-618.

The foregoing description is exemplary in nature and it is contemplated that the preferred embodiments described therein could be modified without departing from the scope of the claims.

## Claims

1. A package for holding media discs, which package comprises a stack of disc-holder trays (30), each tray in the stack having a hinged edge face, a primary surface defining portion (25) of the tray (30), for releasably retaining a disc upon that primary surface defining portion (25), the hinged edge faces (44) of the trays (30) in the stack being aligned with each other so that all the hinged edge faces of the stack are substantially flush, and so that the primary surface defining portion (25) of each tray (30) in the stack is immediately adjacent the primary surface defining portion (25) of the tray (30) immediately adjacent thereto so that, when the trays (30) are assembled one above the other, that primary surface defining portion (25) thereby acts as a cover for any disc that is releasably retained by the immediately adjacent tray, a flexible hinge and connecting member (22) permanently affixed to all the flush hinged edge faces (44), such that all the hinge edge faces are connected to a common flexible hinge and connecting member (22), the flexible hinge and connecting member (22) being disposed in a plane substantially containing and connecting the flush edge faces, and hinging the trays (30) together one to the next so that they can be fanned out by flexing the flexible hinge and connecting member (22) along planes which pass between each adjacent pair of hinged edge faces (44).

2. A package according to claim 1, wherein the package further includes a jacket (20) and is closed by folding the jacket (20) around the stack of trays.

3. A package according to claim 2, wherein the stack of trays is attached to the jacket (20) only at a single tray (30) mounted onto an interior panel of the jacket (20).

4. The package according to claims 2 to 3 further including a slip case (120) that closely fits around the stack of trays and jacket when they are folded into a closed configuration.

5. The package of any of claims 2 to 4 further including fastening means (330) for holding the package closed.

6. The package according to claims 2 to 5, wherein the jacket includes a plurality of panels that wrap around the stack of trays, the jacket further including a flap (326) expending from a first panel that attaches to a second panel to hold the package closed.

7. The package according to any preceding claim, wherein the hinged edge faces of an adjacent pair of trays can be hinged from a closed position in which the hinged edge faces are substantially flush to an open position in which adjacent hinged edge faces are juxtaposed.

8. The package according to claim 1 further including a carrier into which the stack of trays is inserted.

9. A method for manufacturing a package, which method comprises: aligning a plurality of disc-holder trays (30) adjacent one another to form a stack of trays such that a hinge edge face of each tray is flush with a hinged edge face of each other tray, and such that a primary surface defining portion (25) of each tray, for releasably receiving a disc, is immediately adjacent the primary surface defining portion (25) of the tray immediately adjacent thereto so that the primary surface defining portion (25) acts as a cover for any disc that is releasably retained upon the primary surface defining portion (25) of the immediately adjacent tray (30); affixing a flexible hinge and connecting member (22) to those hinged edge faces such that all the hinge edge faces are connected to a common flexible hinge and connecting member in a common plane such that the trays are hinged one to the next and so that they can be fanned out by flexing the flexible hinge and connecting member (22) along planes which pass between each adjacent pair of hinged edge faces.

10. The method according to claim 9 further comprising mounting the stack of trays onto an interior panel of a jacket, the jacket folding around the stack of trays to close the package.

11. The method according to claim 10, wherein a bottom tray of the stack of trays is mounted onto the interior panel of the jacket.

12. The method according to claims 10 to 11, further comprising wrapping a plurality of panels, of which the jacket is comprised, around the stack of trays, the jacket further comprising a flap extending from a first panel, which flap is attached to a second panel to hold the package closed.

13. The method according to claims 9 to 12 further comprising advancing the stack of trays so as to affix the flexible hinge and connecting member (22) to the stack of trays.

14. The method according to claims 9 to 13 cutting the hinge material between the trays at regular intervals to produce hinge assemblies having a desired number of trays.

15. An assembly for creating a package for holding a plurality of media discs in said package, the assembly comprising a plurality of trays (30) each of which is adapted to receive a media disc and to releasably retain a disc in situ, and means arranged to be applied to a hinge edge face (44) of a stack formed by said plurality of trays (30) having their hinge edge faces in a common plane whereby to secure the trays together to form said package, the means comprising a flexible hinge and connecting member (22) which can be applied to the plurality of hinge edge faces in the form of a strip of predetermined length or from a continuous supply thereof so that, when the trays are so assembled they can be fanned out by flexing the flexible hinge and connecting member (22) along planes which pass between each adjacent pair of hinged edge faces.

## Patentansprüche

1. Verpackung zum Aufbewahren von Datenscheiben, wobei die Verpackung einen Stapel von scheibenhaltenden Ablagen (30) umfasst, wobei jede Ablage in dem Stapel eine angelenkte Kantenseite aufweist, einen eine Hauptfläche definierenden Abschnitt (25) der Ablage (30), um auf dem eine Hauptfläche definierenden Abschnitt (25) entfernbar eine Scheibe zu halten, wobei die angelenkten Kantenseiten (44) der Ablagen (30) in dem Stapel miteinander ausgerichtet sind, so dass alle angelenkten Kantenseiten des Stapels im Wesentlichen bündig sind und so dass der eine Hauptfläche definierende Abschnitt (25) von jeder Ablage (30) in dem Stapel unmittelbar an den eine Hauptfläche definierenden Abschnitt (25) der Ablage (30) angrenzt, die unmittelbar daran angrenzt, so dass, wenn die Ablagen (30) eine über der anderen angeordnet sind, dieser eine Hauptfläche definierende Abschnitt (25) somit als eine Abdeckung für jedwede Scheibe dient, die entfernbar von der unmittelbar angrenzenden Ablage gehalten wird, wobei ein flexibles Gelenk- und Verbindungselement (22) permanent an allen bündigen, angelenkten Kantenseiten (44) angebracht ist, so dass alle angelenkten Kantenseiten mit einem gemeinsamen flexiblen Gelenk- und Verbindungselement (22) verbunden sind, wobei das flexible Gelenk- und Verbindungselement (22) in einer Ebene angeordnet ist, die im Wesentlichen die bündigen Kantenseiten enthält und verbindet, sowie die Ablagen (30) eine neben der anderen gelenkig miteinander verbindet, so dass diese ausgefächert werden können, indem das flexible Gelenk- und Verbindungselement (22) entlang Ebenen gebogen wird, die durch jedes angrenzendes Paar von angelenkten Kantenseiten (44) hindurch laufen.

2. Verpackung nach Anspruch 1, wobei die Verpackung ferner eine Hülle (20) umfasst und geschlossen wird, indem die Hülle (20) um den Stapel von Ablagen gefaltet wird.

3. Verpackung nach Anspruch 2, wobei der Stapel von Ablagen lediglich an einer einzelnen Ablage (30) an die Hülle (20) angebracht ist, die an einer Innenwandfläche der Hülle (20) angebracht ist.

4. Verpackung nach einem der Ansprüche 2 bis 3, wobei die Verpackung ferner einen Gleitbehälter (120) umfasst, der schmiegsam um den Stapel von Ablagen und die Hülle passt, wenn diese in einen geschlossenen Zustand gefaltet sind.

5. Verpackung nach einem der Ansprüche 2 bis 4, wobei die Verpackung ferner Befestigungsmittel (330) umfasst, um die Verpackung geschlossen zu halten.

6. Verpackung nach einem der Ansprüche 2 bis 5, wobei die Hülle eine Vielzahl von Wandflächen umfasst, die sich um den Stapel von Ablagen wickeln, wobei die Hülle ferner eine Klappe (326) umfasst, die sich von einer ersten Wandfläche erstreckt, die an einer zweiten Wandfläche angebracht ist, um die Verpackung geschlossen zu halten.

7. Verpackung nach einem der vorhergehenden Ansprüche, wobei die angelenkten Kantenseiten eines benachbarten Paares von Ablagen gelenkig von einer geschlossenen Position, in der die angelenkten Kantenseiten im Wesentlichen bündig sind, in eine offene Position bewegt werden können, in der die angelenkten Kantenseiten nebeneinander angeordnet sind.

8. Verpackung nach Anspruch 1, wobei die Verpackung ferner einen Träger umfasst, in den der Stapel von Ablagen eingebracht ist.

9. Verfahren zum Herstellen einer Verpackung, wobei das Verfahren umfasst: das Ausrichten einer Vielzahl von scheibenhaltenden Ablagen (30), und zwar angrenzend aneinander, um einen Stapel von Ablagen auszubilden, so dass eine angelenkte Kantenseite von jeder Ablage bündig mit einer angelenkten Kantenseite von jeder anderen Ablage ist und so dass ein eine Hauptfläche definierender Abschnitt (25) von jeder Ablage zur entfernbaren Aufnahme einer Scheibe unmittelbar an den eine Hauptfläche definierenden Abschnitt (25) der Ablage angrenzt, die unmittelbar daran angrenzt, so dass der eine Hauptfläche definierende Abschnitt (25) als eine Abdeckung für jedwede Scheibe dient, die entfernbar auf dem eine Hauptfläche definierenden Abschnitt (25) der unmittelbar angrenzenden Ablage (30) gehalten wird; das Befestigen eines flexiblen Gelenk- und Verbindungselements (22) an diese angelenkten Kantenseiten, so dass alle angelenkten Kantenseiten mit einem gemeinsamen flexiblen Gelenk- und Verbindungselement in einer gemeinsamen Ebene verbunden sind, so dass die Ablagen gelenkig eine mit der anderen verbunden sind und so dass diese ausgefächert werden können, indem das flexible Gelenk- und Verbindungselement (22) entlang von Ebenen gebogen wird, die zwischen jedem angrenzenden Paar von angelenkten Kantenseiten hindurch laufen.

10. Verfahren nach Anspruch 9, wobei das Verfahren ferner das Anbringen des Stapels von Ablagen auf eine innere Wandfläche einer Hülle umfasst, wobei die Hülle um den Stapel von Ablagen gefaltet wird, um die Verpackung zu verschließen.

11. Verfahren nach Anspruch 10, wobei eine Bodenablage des Stapels von Ablagen an der Innenwandfläche der Hülle angebracht ist.

12. Verfahren nach einem der Ansprüche 10 bis 11, wobei das Verfahren ferner das Wickeln einer Vielzahl von Wandflächen umfasst, von denen die Hülle ein Teil ist, und zwar um den Stapel von Ablagen, wobei die Hülle ferner eine Klappe umfasst, die sich von einer ersten Wandfläche erstreckt, wobei die Klappe an eine zweite Wandfläche angebracht ist, um die Verpackung geschlossen zu halten.

13. Verfahren nach einem der Ansprüche 9 bis 12, wobei das Verfahren ferner das Vorrücken des Stapels von Ablagen umfasst, um das flexible Gelenk- und Verbindungselement (22) an dem Stapel von Ablagen anzubringen.

14. Verfahren nach einem der Ansprüche 9 bis 13, wobei das Gelenkmaterial zwischen den Ablagen in gleichmäßigen Intervallen geschnitten ist, um Gelenkanordnungen zu erzeugen, die eine erwünschte Anzahl von Ablagen aufweisen.

15. Anordnung zum Erzeugen einer Verpackung zum Aufbewahren einer Vielzahl von Datenscheiben in der Verpackung, wobei die Anordnung eine Vielzahl von Ablagen (30) umfasst, von denen jede ausgestaltet ist, eine Datenscheibe aufzunehmen und eine Scheibe entfernbar an Ort und Stelle zu halten, sowie Mittel, die angeordnet sind, auf eine angelenkte Kantenseite (44) eines Stapels angewendet zu werden, der durch die Vielzahl von Ablagen (30) ausgebildet wird, wobei deren angelenkte Kantenseiten in einer gemeinsamen Ebene liegen, um somit die Ablagen miteinander zu befestigen, um die Verpackung auszubilden, wobei die Mittel ein flexibles Gelenk- und Verbindungselement (22) umfassen, das auf die Vielzahl von angelenkten Kantenseiten in der Form eines Streifens mit einer vorbestimmten Länge oder von einem kontinuierlichen Vorrat davon angebracht werden kann, so dass dann, wenn die Ablagen derart angeordnet sind, diese ausgefächert werden können, indem das flexible Gelenk- und Verbindungselement (22) entlang Ebenen gebogen wird, die durch angrenzende Paare von angelenkten Kantenseiten hindurch laufen.

## Revendications

1. Emballage destiné à retenir des disques média, lequel emballage comprend une pile de plateaux porte-disque (30), chaque plateau dans la pile ayant une face formant un bord articulé, une partie qui délimite la surface primaire (25) du plateau (30), pour retenir, de manière amovible, un disque sur cette partie qui délimite la surface primaire, les faces formant un bord articulé (44) des plateaux (30) dans la pile étant alignées les unes sur les autres de sorte que toutes les faces formant un bord articulé de la pile soient sensiblement de même niveau, et de sorte que la partie qui délimite la surface primaire (25) de chaque plateau (30) dans la pile soit juste à côté de la partie qui délimite la surface primaire (25) du plateau (30) immédiatement adjacent de sorte que, lorsque les plateaux (30) sont assemblés l'un au-dessus de l'autre, cette partie qui délimite la surface primaire (25) agit comme une couverture pour n'importe quel disque qui est retenu de manière amovible par le plateau situé immédiatement à côté, une charnière flexible et élément de jonction (22) étant fixés de manière permanente à toutes les faces formant un bord articulé de même niveau (44), de sorte que toutes les faces formant un bord articulé sont reliées à une charnière souple commune et un élément de jonction (22), la charnière souple et l'élément de jonction (22) étant disposés sur un plan contenant et reliant sensiblement la pile de faces formant un bord articulé de même niveau, et articulant les plateaux (30) l'un au suivant de sorte qu'ils puissent être déployés en courbant la charnière flexible et l'élément de jonction (22) tout au long des plans qui passent entre chaque paire adjacente de faces formant un bord articulé (44).

2. Emballage selon la revendication 1, dans lequel l'emballage comprend en outre une pochette (20) et il se ferme en repliant la pochette (20) autour de la pile de plateaux.

3. Emballage selon la revendication 2, dans lequel la pile de plateaux est attachée à la pochette (20) uniquement au niveau d'un seul plateau (30) monté sur un panneau intérieur de la pochette (20).

4. L'emballage selon l'une quelconque des revendications 2 à 3 comportant en outre un étui (120), qui s'adapte de manière serrée autour de la pile de plateaux et de la pochette lorsqu'ils sont repliés jusqu'à un état fermé.

5. Emballage selon l'une quelconque des revendications 2 à 4 comprenant en outre des moyens de fixation (330) pour maintenir l'emballage fermé.

6. Emballage selon l'une quelconque des revendications 2 à 5, dans lequel la pochette comprend une pluralité de panneaux qui enveloppent la pile de plateaux, la pochette comprenant en outre un rabat (326) s'étendant à partir d'un premier panneau qui est attaché à un deuxième panneau pour maintenir l'emballage fermé.

7. Emballage selon l'une quelconque des revendications précédentes, dans lequel les faces formant un bord articulé d'une paire adjacente de plateaux, peuvent être articulées depuis une position fermée dans laquelle les faces formant un bord articulé sont sensiblement au même niveau jusqu'à une position ouverte dans laquelle les faces formant un bord articulé sont juxtaposées.

8. Emballage selon l'une quelconque des revendications précédentes, comprenant en outre un support à l'intérieur duquel la pile de plateaux est introduite.

9. Méthode de fabrication d'un emballage, laquelle méthode consiste à faire aligner une pluralité de plateaux porte-disque (30) situés l'un à côté de l'autre pour former une pile de plateaux de sorte qu'une face formant un bord articulé de chaque plateau soit au même niveau par rapport à une face formant un bord articulé de chaque autre plateau, et de sorte qu'une partie qui délimite la surface primaire (25) de chaque plateau, recevant un disque de manière amovible, se trouve juste à côté de la partie qui délimite la surface primaire (25) du plateau immédiatement adjacent, et de cette manière la partie qui délimite la surface primaire (25) agit comme une couverture pour n'importe quel disque qui est retenu de façon amovible sur la partie qui délimite la surface primaire (25) du plateau immédiatement adjacent (30) ; ensuite à attacher une charnière souple et l'élément de jonction (22) à ces faces formant un bord articulé de telle manière que toutes les faces formant un bord articulé soient connectées à une charnière souple commune et à un élément de jonction sur un plan commun de sorte à ce que les plateaux soient articulés l'un à l'autre et de sorte à ce qu'ils puissent être déployés en recourbant la charnière souple et élément de jonction (22) tout au long des plans qui passent entre chaque paire adjacente de faces formant un bord articulé.

10. Méthode selon la revendication 9 comprenant en outre l'étape consistant à monter la pile de plateaux sur le panneau intérieur de la pochette, la pochette se repliant autour de la pile de plateaux pour fermer l'emballage.

11. Méthode selon la revendication 10, dans laquelle un plateau inférieur de la pile de plateaux est monté sur le panneau intérieur de la pochette.

12. Méthode selon l'une quelconque des revendications 10 à 11, comprenant en outre l'étape consistant à envelopper une pluralité de panneaux, dont la pochette est constituée, autour de la pile de plateaux, et la pochette comprend en outre un rabat s'étendant depuis un premier panneau, ledit rabat s'attache à un deuxième panneau pour maintenir l'emballage fermé.

13. Méthode selon l'une quelconque des revendications 9 à 12 comprenant en outre l'étape consistant à faire avancer la pile de plateaux de manière à attacher la charnière souple et l'élément de jonction (22) à la pile de plateaux.

14. Méthode selon l'une des revendications 9 à 13 consistant à découper le matériau d'articulation entre les plateaux à des intervalles réguliers pour créer des ensembles articulés distincts ayant un nombre voulu de plateaux.

15. Assemblage par lequel se crée un emballage destiné à retenir une pluralité de disques média dans ledit emballage, l'assemblage comprend une pluralité de plateaux (30) dont chacun est adapté à recevoir un disque média et à retenir de façon amovible un disque in situ, et des moyens prêts à être appliqués à une face formant un bord articulé (44) d'une pile formée par ladite pluralité de plateaux (30) ayant leurs faces formant un bord articulé (44) sur un plan commun, ce qui garantit le maintien des plateaux ensemble et permet de former ledit emballage, les moyens comprenant une charnière souple et un élément de jonction (22), peuvent être appliqués à la pluralité de faces formant un bord articulé sous la forme d'une bande d'une longueur prédéterminée ou à partir d'un approvisionnement continu de celle-ci de sorte que, lorsque les plateaux sont assemblés, ils peuvent être déployés en recourbant la charnière souple et l'élément de jonction (22) tout au long des plans qui passent entre chaque paire adjacente de faces formant un bord articulé.
